# EUROPÄISCHE PATENTSCHRIFT

(11) **EP 1 911 626 B1**
(45) Veröffentlichungstag und Bekanntmachung des Hinweises auf die Patenterteilung: **24.03.2010**
(21) Anmeldenummer: 07114038.8
(22) Anmeldetag: 08.08.2007
(51) Int. Cl.: B60P 7/08, B65D 81/05

(54) **Kantenschutzwinkel für Transportgüter**
Edge protection profile for goods in transit
Cornières pour produits de transport

(30) Priorität: 09.10.2006 DE 102006047622
(43) Veröffentlichungstag der Anmeldung: 16.04.2008
(73) Patentinhaber: EVD Entwicklungsgesellschaft für Verbundmaterial Diez mbH, 65582 Diez (DE)
(72) Erfinder: Heuser, Heinz, 65555 Limburg (DE); Hess, Thomas, 65555 Limburg (DE)
(74) Vertreter: WSL Patentanwälte

(56) Entgegenhaltungen:
- WO-A-2006/125107
- US-A- 4 202 449
- US-A- 5 848 865
- US-A1- 2002 094 429

## Beschreibung

Die Erfindung betrifft einen Kantenschutzwinkel zur Ladungssicherung von Transportgütern, bestehend aus zwei unter etwa 90° zueinander angeordneten flächigen Schenkeln zur Auflage auf dem Transportgut, welche durch einen eine unter etwa 45° angestellte Symmetrieebene aufweisenden Bogenabschnitt miteinander verbunden sind und auf der Winkelaußenseite jeweils mit mindestens einer Erhebung versehen sind, über die im Gebrauch ein Zurrgurt verläuft, wobei die Enden des Bogenabschnittes im beiderseitigen Abstand von der Symmetrieebene jeweils als Erhebung mit einer Spannkante in der Gurtauflagefläche ausgebildet sind.

Bekannt sind Kunststoffkantenschützer, die aus Wandstärken von drei oder weniger mm bestehen. Diese dünnen Produkte führen bei dem heute geforderten festen Niederzurren von Transportgütern auf Lastkraftwagen, der Bahn oder Schiffstransporten aufgrund der Krafteinwirkung der Resultierenden auf die Kante zum Aufspringen, wodurch bei empfindlichen Gütern Beschädigungen entstehen können.

Aus der DE 199 04 843 sind Kantenschützer bekannt, die an der Winkelaußenseite eine Aufwölbung haben, um dem oben genannten Aufspreizen entgegenzuwirken, bei denen aber die resultierende Zurrkraft im wesentlichen auf die Kante des Bogenabschnittes des Kantenschützers wirkt. Auch wenn diese Kantenschützer mit Verstärkungsrippen versehen sind, führt ein festes Niederzurren oft zu Verformungen und in der Folge zu Produktbeschädigungen.

Ein Kantenschutzwinkel der eingangs genannten Art ist ähnlich aus der US 5,848,865 bekannt. Bei diesem Kantenschutzwinkel ist der Bogenabschnitt mit geringer Materialstärke ausgebildet, und auf seine Scheitellinie wirken von außen bei aufgelegtem und verzurrtem Gurt erhebliche Anpresskräfte, die zu den gefürchteten Beschädigungen des Transportgutes führen können. Die geringe Materialstärke bzw. der dünn ausgebildete Bogenabschnitt ist bewusst gewählt, damit sich der Bogenabschnitt der Ladungskante anpassen kann. Der Bogenabschnitt selbst hat bei empfindlichen Ladungsgütern, wie z.B. Papierrollen, keine eigene Schutzfunktion.

Dies ist bei dem bekannten Schutzwinkel nicht immer verlangt, denn es handelt sich zu beiden Teilen um einen Gurtschutz, bei welchem der Zurrgurt vor dem Durchscheuern an der Ladungskante bewahrt werden soll. Die angesprochenen Ladungsgüter (Holz, Rohre, Stangen, Langware) sind im Vergleich zu Papierrollen als wesentlich unempfindlicher und härter anzusehen. Der Gurt wird bei diesen eher beschädigt als die Transportkante. Für den Transport stehender Papierrollen mit einem kleinen Radius an der sich vertikal oben befindenden Ladungskante ist der bekannte Schutzwinkel nicht geeignet, weil man eine Beschädigung der äußeren Papierlagen während des Transports befürchten muss. Außerdem kann der aus der US 5,848,865 bekannte Zurrgurt während des Transportes durch die dabei entstehenden Vibrationen und Schwingungen verrutschen, so dass er nicht immer seine volle Ladungssicherung behält.

Weiterhin betrifft US 2002/0094429 A1 die Sicherung von empfindlichen Platten, z.B. Glas, auf Transportgestellen beim Versenden oder Lagern. Es handelt sich um eine Einrichtung gegen Verrutschen auf einer Ablage. Die bekannten Halteeinrichtungen bestehen aus einem Zweischichtmaterial, nämlich eine dünne, harte Schicht, z.B. aus Kunststoff, Metall oder dergleichen, außen, und eine wesentlich dickere Schicht innen, die geschäumt ist. Aufgabe dieser dicken, geschäumten Schicht ist zum Einen die rutschhemmende Wirkung und zum Anderen die Polsterung gegenüber dem Transportgut.

Diese bekannte Halteeinrichtung ist nicht für das Verzurren mit sehr hohen Spannkräften, wie üblich 3000 bis 5000 daN auf Transportladungsflächen geeignet. Unter der Wirkung solcher Spanngurtkräfte würde die geschäumte Schicht vollständig zusammengepresst, und die resultierende Anpresskraft würde vollständig in die Transportgutkante gelenkt mit der Gefahr der Transportgutbeschädigung. Die weiche Schaumschicht kann bei den hohen Zurrkräften keinen Schutz bieten.

Der Erfindung liegt daher die Aufgabe zugrunde, den Kantenschutzwinkel der eingangs bezeichneten Art so zu verbessern, dass die Hauptanpresskraft an einer Stelle außerhalb der Hohlkehle im Abstand von der Transportgutkante unter Druckverteilung auf die Transportgutseitenfläche einwirkt.

Zur Lösung dieser Aufgabe ist erfindungsgemäß vorgesehen, daß der Bogenabschnitt auf der Winkelinnenseite im Bereich der Symmetrieebene eine Hohlkehle aufweist, der Kantenschutzwinkel aus Verbundkörpermaterial oder einem Holzkunststoffmaterial hergestellt ist, die gemeinsame Ebene beider Spannkanten zum Schutz vor Beschädigungen der Transportgurtkante die äußere Oberfläche des Bogenabschnittes nicht berührt, so dass die durch die Spannkante vierlaufende Anpresskraft an einer Stelle im Abstand von der Transportgurtkante auf der Seitenoberfläche des Transportgurtes ausgeübt wird, um die Anpresskraft am Bogenabschnitt zu verringern, und dass die Dicke des Schenkels zwischen Transportgutauflagefläche und Gurtauflagefläche mindestens 15 mm beträgt.

Alternativ kann erfindungsgemäß auch vorgesehen werden, dass der Bogenabschnitt auf der Winkelinnenseite im Bereich der Symmetrieebene eine Hohlkehle aufweist, dass der Kantenschutzwinkel aus Verbundkörpermaterial oder einem Holzkunststoffmaterial hergestellt ist, dass die gemeinsame Ebene beider Spannkanten die äußere Oberfläche des Bogenabschnittes tangential berührt, so dass die durch die Spannkante verlaufende Anpresskraft an einer Stelle im Abstand von der Transportgutkante auf die Seitenoberfläche des Transportgutes ausgeübt wird, und dass die Dicke des Schenkels zwischen Transportgutauflagefläche und Gurtauflagefläche mindestens 15 mm beträgt. Im Unterschied zu der erstgenannten Lösung, bei welcher die gemeinsame Ebene beider Spannkanten die Oberfläche des Bogenabschnittes nicht berührt, kann alternativ auch vorgesehen sein, dass die gemeinsame Ebene der beiden Spannkanten die Oberfläche tangential berührt. In der Querschnittsansicht bedeutet dies eine Punktberührung und in der Draufsicht eine Linienberührung. Auch diese Berührungen erlauben nicht die Übertragung einer Druckkraft, so dass die äußere Oberfläche des Bogenabschnittes durch den beschriebenen Aufbau geschont und gestützt ist.

Um ein preiswert herstellbares und gut verarbeitbares Material für den Kantenschutzwinkel gemäß der Erfindung zu schaffen, kann man Abfälle verwenden, welche Reste oder Rezyklate aus thermoplastischen Polymeren, vorzugsweise Polyethylen oder Polypropylen, enthalten. Zur Herstellung eines Verbundpartikelkörpers wird mit thermoplastischem Kunststoff beschichtetes Verbundmaterial mit Papier oder Karton als Trägermaterial zu Partikeln zerkleinert. Daraus wird eine schüttfähige Masse gebildet, diese wird auf Schmelztemperatur des Kunststoffes erwärmt und unter Druck sowie unter Einregelung der Dichte zu dem Verbundpartikelkörper verpresst. Eine besondere Zugabe von Bindemitteln oder Klebstoffen extern ist nicht erforderlich. Das Papier bzw. der Karton ist mit Kunststoff beschichtet, der bei Erwärmung auf mindestens Schmelztemperatur die einzelnen Partikel fest miteinander verklebt. Es wird vorausgesetzt, dass die Vierbundmaterialien auf geeignete Partikelgröße zerkleinert sind. Auf diese Weise hat man ein preiswertes Rohmaterial, das zum Beispiel aus Abfällen der Getränkekartonindustrie stammt. Der aus diesem Rohmaterial hergestellte Presskörper ist thermoformbar und wasserbeständig. Durch die Kunststoffbeschichtung der Verbundpartikel und den Schmelzvorgang beim Erwärmen während des Herstellungsverfahrens ist ein durch und durch geschlossener Körper geschaffen, der gut verformbar ist. Aus diesem preiswerten Rohmaterial kann man also den gewünschten Kantenschutzwinkel erstellen.

Für den Schutz der Transportgutkante eignet sich das steife Verbundpartikelkörpermaterial, welches vorzugsweise aus Papier, Kunststoff und Aluminium besteht, in besonderer Weise - im Gegensatz zu dem im Bogenabschnitt sehr dünn ausgestalteten, aus der US 5.848,865 bekannten Gurtschutz, zumal gemäß der Erfindung der Kantenschutz im Bereich der 90°-Kantenschutzzone massiv ausgebildet und mit einer Hohlkehle versehen ist.

Die hier ins Auge gefassten Transportgüter liegen meist in Form von Rollen oder Blöcken vor, die Kanten (Transportgutkanten) haben, welche vor Beschädigungen zu schützen sind. Die beiden Schenkel des bekannten Kantenschutzwinkels sind durch einen Bogenabschnitt miteinander verbunden, durch den eine unter etwa 45° angestellte Symmetrieebene gelegt zu denken ist, weil auf jeder Seite dieser Symmetrieebene zumindest im näheren Abstand ähnliche Verhältnisse herrschen. Die bekannten Winkel sind auf der Außenseite jeweils mit einer oder mehreren Erhebungen versehen, über welche im Gebrauch der Zurrgurt verläuft und eine Anpresskraft ausübt, während seine Zugrichtung durch die Erhebung verändert wird. Man versucht, die von außen in Richtung auf die Transportgutkante wirkende Anpresskraft zu verringern und damit das Transportgut besser zu schützen. Gleichwohl treten immer wieder Beschädigungen an der Transportgutkante auf.

Erfindungsgemäß ist deshalb vorgesehen, den reinen Kunststoff für die Herstellung des Kantenschutzwinkels durch Verbundpartikelkörpermaterial oder ein Holzkunststoffverbundmaterial zu ersetzen. Zur vereinfachten Darstellung wird im folgenden das Verbundpartikelkörpermaterial beschrieben. Mit diesem lassen sich Schenkel größerer Dicke, nämlich mit einer Dicke bzw. Höhe von mindestens 15 mm herstellen. Presskörper aus Verbundpartikelkörpermaterial verformen sich auch nicht so leicht wie reiner Kunststoff, der in aller Regel mit geringeren Dicken verwendet wird.

Das besondere bei der neuen Erfindung besteht außerdem in der Ausgestaltung des Bogenabschnittes in der oben beschriebenen Weise mit den beiden Erhebungen zu jeder Seite der Symmetrieebene, wobei sich außen oben an der Erhebung die Spannkante ergibt, in welche man die gedachte gemeinsame Ebene legen kann, nämlich eine die Symmetrieebene unter etwa 90° schneidende Ebene. Diese den beiden Spannkanten gemeinsame Ebene hat im Gebrauch durchaus einen praktischen Sinn, denn sie liegt in der Unterseite des im Gebrauch festgezurrten Gurtes. Beim Verzurren des Gurtes übt dieser seine Hauptanpresskraft auf die beiden Erhebungen aus, so dass damit die Anpresskraft aus der Symmetrieebene, in der sich die Transportgurtkante befindet, in den stabileren Materialbereich gelenkt wird. Wenn die den beiden Spannkanten gemeinsame Ebene die äußere Oberfläche des Bogenabschnittes nicht berührt, dann entfällt die Berührung des Zurrgurtes mit dem Bogenabschnitt, genauer mit der Scheitellinie des Bogenabschnittes. Berührt der Zurrgurt den Bogenabschnitt zwischen den beiden Spannkanten aber nicht oder verläuft er auch nur tangential zu der äußeren Oberfläche des Bogenabschnittes, dann kann mit Vorteil auf die Transportgurtkante nicht mehr eine Anpresskraft wirken. Hierdurch aber wird das Transportgut vor Beschädigungen durchgreifend geschützt.

Durch die Auflage des Zurrgurtes auf der jeweiligen Spannkante wird eine Anpresskraft in Richtung auf die mehr oder weniger ebene Seitenoberfläche des Transportgutes ausgeübt. Stellt man diese Anpresskraft durch einen Vektor dar, dann verläuft dieser einerseits durch die beschriebene Spannkante und trifft andererseits längs einer Linie auf die Seitenoberfläche des Transportgutes. Diese zuletzt genannte Auftrefflinie (oder Schnittlinie der Kraftvektorebene mit der Seitenoberfläche des Transportgutes) kann man auch als Haupteingriffslinie bezeichnen. Diese stellt das Zentrum der einwirkenden Hauptpresskraft dar.

Durch die Geometrie des erfindungsgemäßen Kantenschutzwinkels befindet sich diese Haupteingriffslinie in einem Abstand von der Transportgutkante. Mit anderen Worten wird durch die Maßnahme der Erfindung die Haupteingriffsstelle der Anpresskraft von der Transportgutkante in Abstand gebracht; möglichst in einen derart großen Abstand gebracht, dass die Transportgutkante keine Beschädigungen mehr erfahren kann.

Dieser Abstand zwischen der zu schützenden Kante, der Transportgutkante und der Haupteingriffsstelle kann um so größer eingerichtet werden, je größer der Abstand der beiden Spannkanten voneinander ist. Ein Mittel zur Vergrößerung des Abstandes der beiden Spannkanten voneinander ist die Vergrößerung der Erhebung an dem jeweiligen Ende des Bogenabschnittes.

Durch das angegebene Material für den erfindungsgemäßen Kanteschutzwinkel kann die Dicke des Schenkels gegenüber den bislang verwendeten Kunststoffen erheblich größer ausgestaltet werden, zum Beispiel 15 mm, bevorzugter 17 bis 30 mm und bei einem besonders bevorzugten Ausführungsbeispiel 20 mm ; obgleich auch größere Dicken eingesetzt werden können. Die besondere Schenkeldicke erlaubt eine lineare Übertragung der kleineren Gurtanpressung auf eine größere Fläche, nämlich die Flächen der beiden unter etwa 90° zueinanderstehenden Schenkel. Dazu ist wiederum ein sehr steifes Verbundpartikelmaterial zweckmäßig und vorteilhaft.

Um den Anpressdruck flächig auf dem Transportgut zu verteilen, sollte die Auflagefläche des Schenkels groß ausgestaltet werden, zum Beispiel etwa 10 auf 10 cm. Günstig sind auch Winkelschenkel mit hoher Biegefestigkeit, so dass die angreifende Anpresskraft gut aufgenommen und gleichmäßig an das Ladegut weitergegeben werden kann.

Durch den Schnitt der Symmetrieebene mit der Gurtauflagefläche im Bereich des Bogenabschnittes wird die oben schon erwähnte Scheitellinie des Bogenabschnittes gebildet.

Vorzugsweise sieht die Erfindung Winkelschenkel gleicher Länge und vorzugsweise auch gleicher Auflagefläche vor, so dass der Benutzer des neuen Kantenschutzwinkels beim Anlegen an das Transportgut keine Verdrehauswahl hat, denn bei einer solchen Auswahl können unerwünschte Probleme und Fragen entstehen.

Wenn der Bogenabschnitt auf der Winkelinnenseite im Bereich der Symmetrieebene nach einer weiteren vorteilhaften Ausgestaltung eine Hohlkehle aufweist, trägt dies zur Begünstigung des Schutzes der Transportgutkante bei. Zwar ist die Ausgestaltung einer solchen Hohlkehle an einem Kantenschutzwinkel aus der US 5,518,348 bekannt, dort wird die Anpresskraft jedoch dazu benutzt, die beiden unter weniger als 90° zueinander angestellten Schenkel aufzuspreizen. Ferner wird bei geringen Presskräften die Transportgutkante durch die Hohlkehle geschützt. Bei hohen Presskräften hingegen und bei empfindlichen Kanten können deren Beschädigungen nicht vermieden werden.

Günstig ist es gemäß der Erfindung ferner, wenn mindestens einer der Schenkel auf der Winkelinnenseite eine rutschhemmende Oberfläche hat. Zwar kann man die in Rede stehende Oberfläche mit einer rutschhemmenden Auflage versehen, erfindungsgemäß ist aber der aus dem beschriebenen Material hergestellte Kantenschutzwinkel selbst mit einer solchen Rauigkeit versehen, dass sich ohne ergänzende Bearbeitungsschritte bereits eine natürliche, rutschhemmende Oberfläche ergibt.

Eine besonders bevorzugte Ausführungsform der Erfindung ist **dadurch gekennzeichnet, dass** die äußere Oberfläche des Bogenabschnittes gegenüber der gemeinsamen Ebene beider Spannkanten in Richtung auf die Transportgutkante eingezogen ist. Mit anderen Worten ist der Bogenabschnitt derart ausgestaltet, dass sich seine äußere Oberfläche, welche dem Zurrgurt im Gebrauch gegenüberliegt, im Abstand von dem Gurt befindet. Die Wirkung und Richtung der Anpresskraft (auf der jeweiligen Seite der Symmetrieebene) sind dann garantiert so steuerbar, dass durch den Abstand der beiden Spannkarten voneinander die Haupteingriffslinie von der zu schützenden Kante des Transportgutes weg verlegt werden kann.

Eine weitere bevorzugte Ausführungsform der Erfindung ist **dadurch gekennzeichnet, daß** im Abstand von den Enden des Bogenabschnittes in Richtung weg von der Symmetrieebene jeweils mindestens eine zweite Erhebung mit Gurtauflagefläche vorgesehen ist. Zwar könnte man die Dicke des Schenkels von der Spannkante der oben beschriebenen (ersten) Erhebung über den ganzen Schenkel hinweg bei gleicher Dicke behalten, sieht man aber die erwähnte zweite Erhebung (auf der jeweiligen Seite der Symmetrieebene) vor, dann bedeutet dies eine oder mehrere Ausnehmung/en zwischen den Erhebungen, durch welche Material gespart wird und auch das Gewicht des Kantenschutzwinkels nicht unerheblich reduziert werden kann. Beobachtet hat man ferner den Vorteil, daß durch diese mehreren Erhebungen, welche quer zu der Gurtlaufrichtung verlaufen, Ausnehmungen ein Rutschen des Gurtes im Gebrauch in seiner Längsrichtung stark verringern, wenn nicht ganz verhindern. Der Zurrgurt wird nämlich durch seine Spannkraft zwischen den Erhebungen etwas in die Ausnehmungen eingezogen, so daß er nach einmaligem Festzurren auch durch Vibrationen oder Schwingungen während des Transportes nicht über die Gurtauflagefläche des Kantenschutzwinkels verrutscht.

Zur weiteren Führung des Zurrgurtes ist bei einer weiteren Ausführungsform erfindungsgemäß vorgesehen, daß an den Seitenenden der Schenkel die Erhebungen überragende Gurtführungsstege angebracht sind und die Erhebungen als Querrippen ausgeformt sind. Der Zurrgurt wird in "längsrichtung" über die Gurtauflagefläche des Kantenschutzwinkels gezogen, so daß er bei dieser Ausführungsform mit den mehreren Erhebungen über diese, nämlich über die Querrippen, gelegt, geführt und gehalten wird. Zwischen diesen Querrippen wird die vorstehend erwähnte Vergrößerung der Rutschfestigkeit erreicht, die Rutschfestigkeit in Längsrichtung des Zurrgurtes. In Querrichtung halten die beschriebenen Gurtführungsstege den Gurt an seinem gewünschten Platz.

Zur weiteren Stabilisierung des Zurrgurtes im Betrieb mit dem erfindungsgemäßen Kantenschutzwinkel ist es vorteilhaft, wenn die Querrippen von Längsrillen durchzogen sind. Diese vergrößern die Rutschfestigkeit des Gurtes in dessen Querrichtung, denn der Gurt zieht sich beim Festzurren ein wenig in die Längsrillen ein. Deshalb ergibt sich eine gute Querstabilisierung.

Außerdem hat sich gezeigt, daß sowohl durch die Ausnehmungen zwischen den Querrippen als auch durch die Längsrillen in den Querrippen Materialeinsparungen ermöglicht werden. Ein weiterer Vorteil dieser Maßnahmen ist eine bessere und schnellere Kühlung der Werkzeuge bei der Erstellung eines in dieser Weise ausgestalteten Kantenschutzwinkels. Es können insbesondere bei den eingangs beschriebenen Materialien für den erfindungsgemäßen Winkel mehr solcher Kantenschutzwinkel pro Zeiteinheit gespritzt oder gepreßt werden.

Sieht man auf jeder Seite der Symmetrieebene 2, 3 oder mehr Erhebungen mit den Gurtauflageflächen vor, dann kann man bei einer bevorzugten Ausführungsform eine ebene Gurtauflagefläche erreichen, die ein Übereinanderstapeln von weiteren Transportgütern begünstigt. Ebene Oberflächen eignen sich gut für ein sicheres Verzurren und Fixieren von übereinandergestapelten Transportgütern, zum Beispiel auf Paletten gehalterten Blöcken oder Rollen.

Bei weiterer vorteilhafter Ausgestaltung der Erfindung wird vorgesehen, daß die der Symmetrieebene abgewandte Fläche der Erhebung gegenüber der Schenkelmittelfläche zwischen zwei Erhebungen unter 45° angestellt ist. Es wird dabei davon ausgegangen, daß bei einer bevorzugten Ausführungsform zwischen jeweils zwei Erhebungen die sogenannte Schenkelmittelfläche liegt, die - über alle Erhebungen gesehen - eine auf derselben Höhe liegende ebene Fläche ist. Der Vorteil der unter 45° angestellten Fläche an der jeweiligen Erhebung ergibt sich für die Herstellung des Kantenschutzwinkels, der in einem Formwerkzeug erhitzt, gepreßt und geformt ist, wobei das Formwerkzeug bei der Herausnahme des fertigen Schutzwinkels dem Endformungsvorgang unterworfen wird, der durch die unter 45° angestellte Fläche besonders begünstigt ist. Auf diese Weise lassen sich preiswerte Formwerkzeuge herstellen, so daß auch von daher die Wirtschaftlichkeit des erfindungsgemäßen Kantenschutzwinkels sehr günstig ist.

Der neue Winkel nach der Erfindung kann durch seine große Dicke von mindestens 15 mm mit einer großen Masse versehen werden, durch welche in vorteilhafter Weise eine auf einen Punkt oder eine Linie wirkende Anpreßkraft vergleichmäßigt werden kann. Bei den bisherigen Standardverfahren mit dem üblichen Kunststoff (ohne Kartonteilchen dazwischen) kann dieser Vorteil nicht erreicht werden.

Weitere Vorteile, Merkmale und Anwendungsmöglichkeiten der vorliegenden Erfindung ergeben sich aus der folgenden Beschreibung von Ausführungsbeispielen in Verbindung mit den anliegenden Zeichnungen. Bei diesen zeigen:
- Figur 1: eine Querschnittsansicht eines das Transportgut darstellenden Blockes und eines auf- gesetzten Kantenschutzwinkels einer ersten Ausführungsform,
- Figur 2: eine perspektivische Ansicht auf die vordere obere Ecke des Blockes mit aufgesetztem Kantenschutzwinkel der ersten Ausführungsform.
- Figur 3: eine Querschnittsansicht ähnlich der Figur 1, jedoch von einer zweiten Ausführungsform mit nur zwei Erhebungen auf jeder Seite der Symmetrieebene,
- Figur 4: eine perspektivische Ansicht auf eine Transportgutkante mit aufgesetztem Kanten- schutzwinkel nach der zweiten Ausführungsform,
- Figur 5: eine Querschnittsansicht ähnlich denen der Figuren 1 und 3, wobei jedoch bei dieser dritten Ausführungsform nur eine Erhebung auf jeder Seite der Symmetrieebene vorge- sehen ist, und
- Figur 6: eine perspektivische Ansicht ähnlich der Figur 2, wobei jedoch der Kantenschutzwinkel nach der dritten Ausführungsform dargestellt ist.

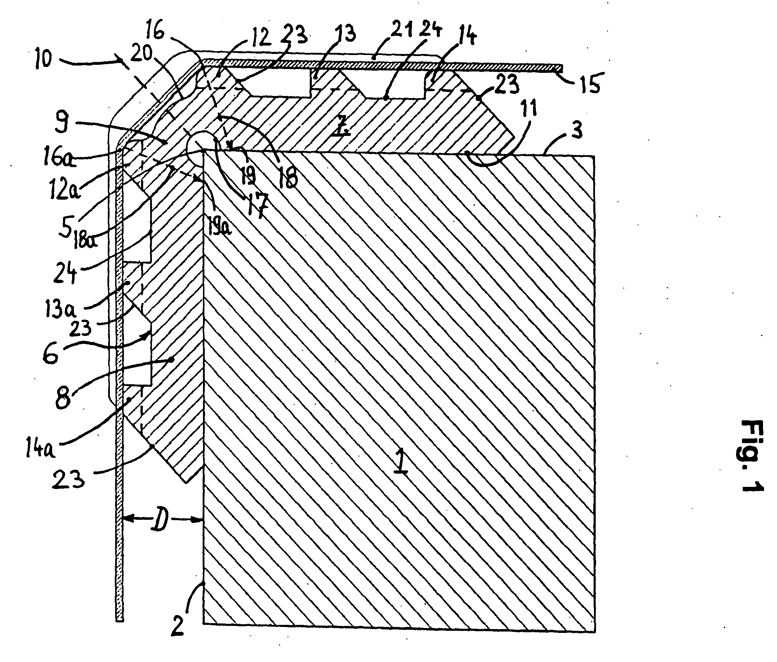

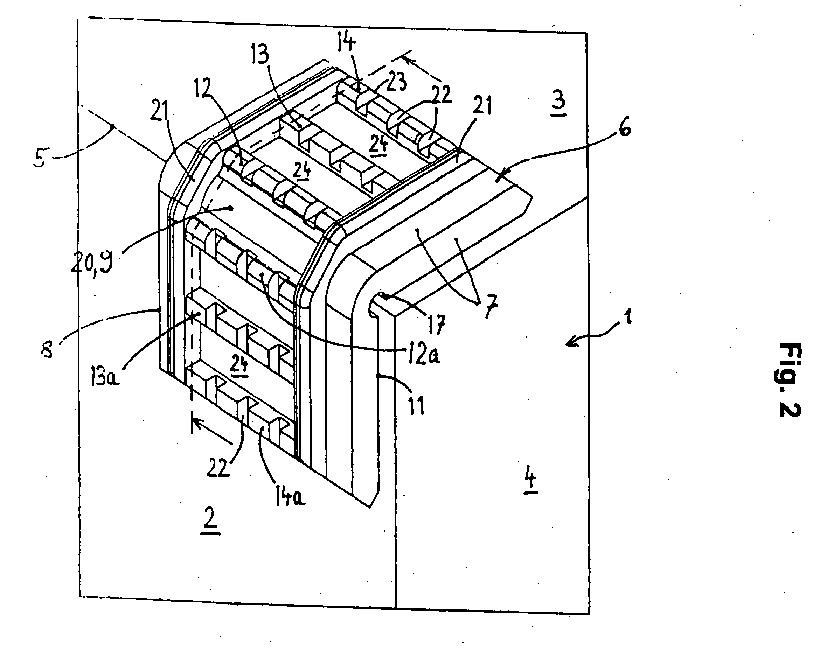

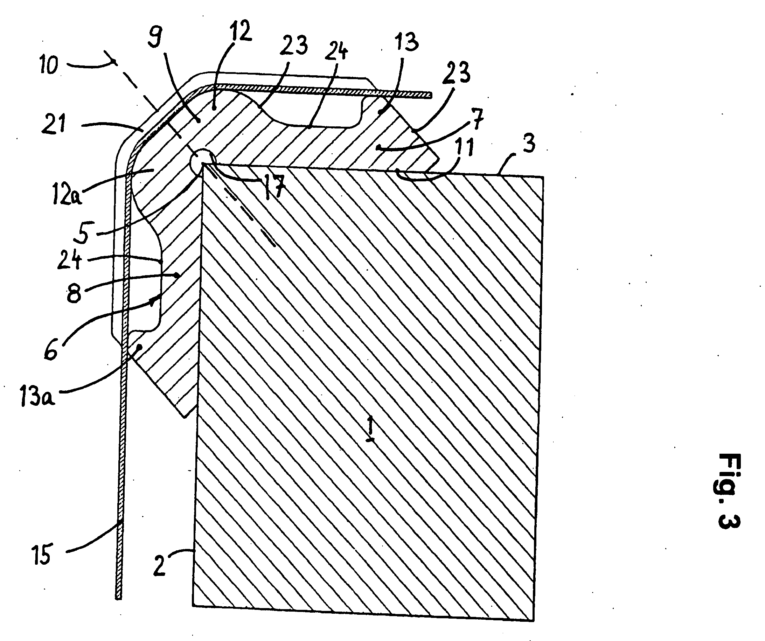

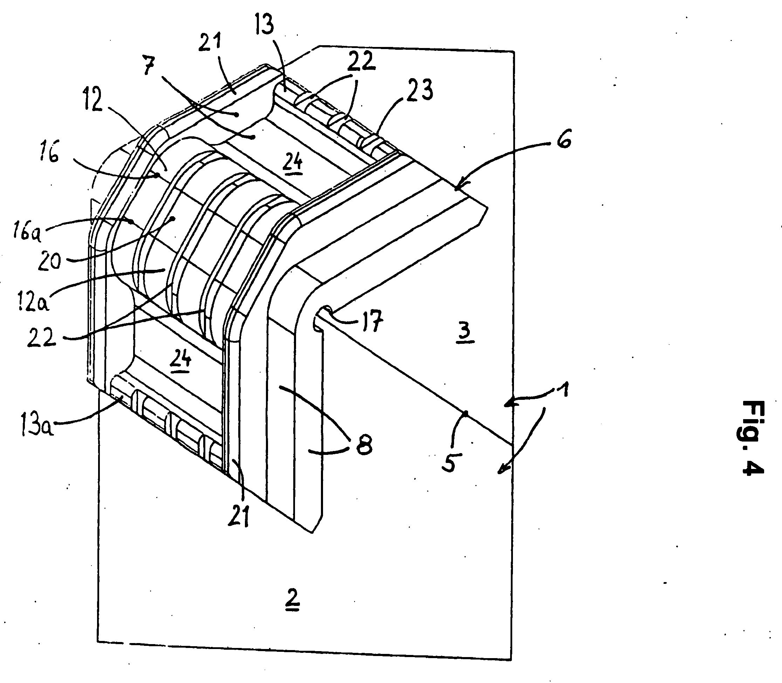

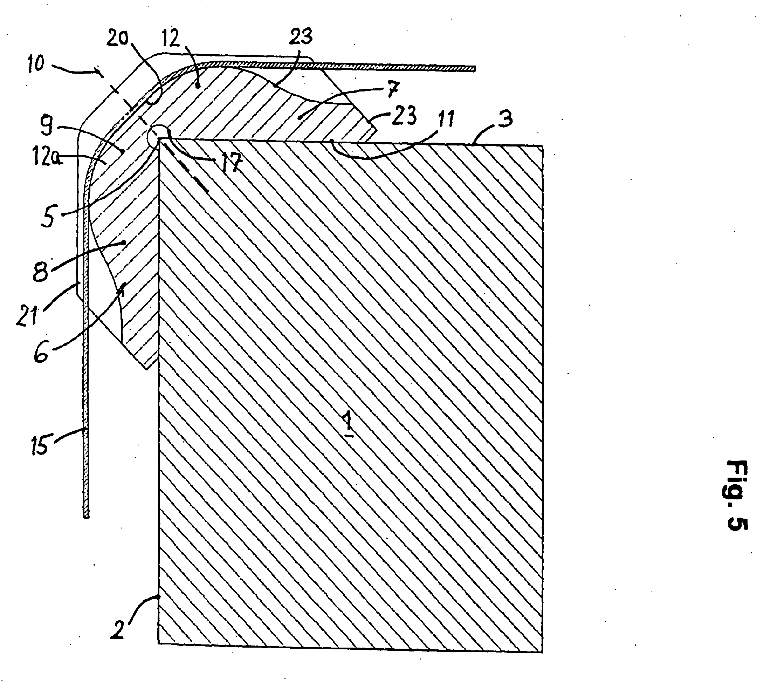

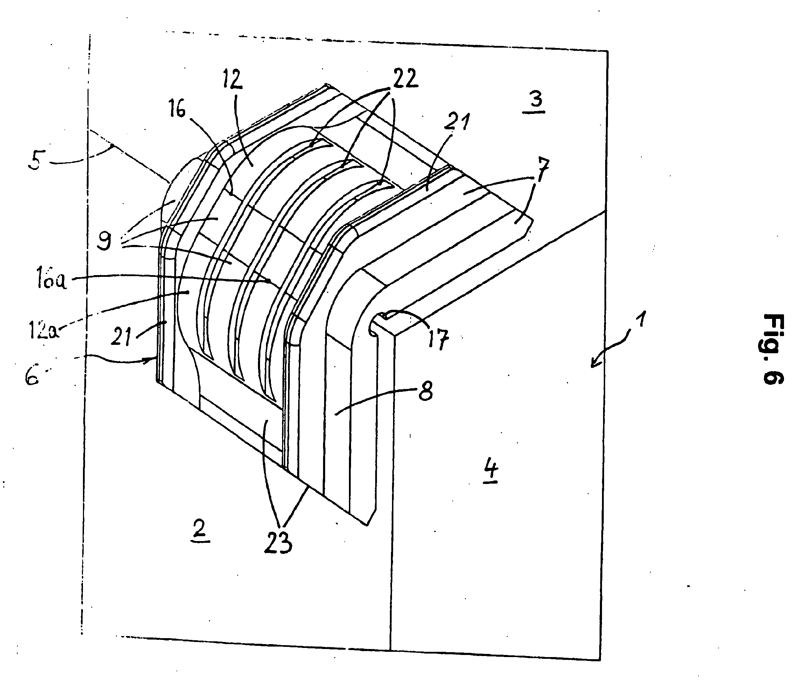

Man erkennt also, daß die sechs Figuren drei verschiedene Ausführungsformen zeigen, wobei immer zwei Figuren für eine Ausführungsform zusammengefaßt sind, also die Figuren 1 und 2 die erste Ausführungsform, die Figuren 3 und 4 die zweite und die Figuren 5 und 6 die dritte Ausführungsform zeigen. Bei den hier dargestellten Ausführungsformen wird davon ausgegangen, daß das Transportgut 1 durch einen Block mit senkrecht aufeinanderstehenden Außenflächen dargestellt ist, nämlich der vorderen Seitenfläche 2, der oberen Seitenfläche 3 und der diese verbindende Fläche 4, die alle senkrecht aufeinander stehen und eben sind. Die zu schützende Transportgutkante ist mit 5 bezeichnet

Der bei der hier dargestellten Ausführungsform mit 6 bezeichnete Kantenschutzwinkel besteht aus Verbundpartikelkörpermaterial, dient der Ladungssicherung des Transportgutes 1 und soll die Transportgutkante 5 vor Beschädigungen schützen. Der Kantenschutzwinkel 6 besteht aus zwei unter 90° zueinander angeordneten flächigen Schenkeln 7 (oben aufliegend) und 8 (seitlich anliegend). Die Schenkel 7, 8 sind durch einen Bogenabschnitt 9 miteinander verbunden. Der Bogenabschnitt 9 wird durch eine Symmetrieebene 10 praktisch halbiert, welche bezüglich der Seitenoberfläche 2 und 3 des Transportgutes 1 und damit auch der Transportgutauflagefläche 11 des Kantenschutzwinkels 6 unter 45° angestellt ist. Die Symmetrieebene 10 ist jeweils durch eine gestrichelte Linie in den Querschnittsansichten der Figuren 1, 3 und 5 gezeigt, nicht aber in den perspektivischen Zeichnungen, um letztere nicht zu überladen. Auf der Außenseite des Kantenschutzwinkels 6 befindet sich auf jeder Seite der Symmetrieebene 10 eine Erhebung 12 auf der einen bzw. 12a auf der anderen Seite der Symmetrieebene 10. Bei der dritten Ausführungsform nach den Figuren 5 und 6 gibt es keine weiteren Erhebungen. Hingegen ist bei der zweiten Ausführungsform nach den Figuren 3 und 3 eine zweite Erhebung 13 auf der einen Seite bzw. 13a auf der anderen Seite der Symmetrieebene 10 vorgesehen. Weitere Erhebungen gibt es bei dieser zweiten Ausführungsform auch nicht. Bei der ersten Ausführungsform nach den Figuren 1 und 2 gibt es zwar auch die zweite Erhebung 13 bzw. 13a, zusätzlich noch aber eine dritte Erhebung 14 auf der einen Seite bzw. 14a auf der anderen Seite der Symmetrieebene 10.

In den jeweiligen perspektivischen Zeichnungen blickt man oben auf die Gurtauflagefläche, die aber nicht mit einer Bezugszahl versehen ist. Mit anderen Worten liegt auf jeder Erhebung außen oben bzw. außen vorn ein Zurrgurt 15, der beim Festzurren im Gebrauch des Kantenschutzwinkels jeweils an den Spannkanten 16 auf der einen Seite bzw. 16a auf der anderen Seite der Symmetrieebene 10 eine Änderung der Zugrichtung erfährt. Von oben rechts nach links unten betrachtet verläuft nach den Querschnittszeichnungen der Figuren 1, 3 und 5 der Zurrgurt 15 zunächst über die wenigstens um 45° nach unten und vorn ab; verläuft dann senkrecht durch die Symmetrieebene 10 auf gerader Bahn bis zu der Spannkante 16a auf der anderen Seite der Symmetrieebene 10, wo der Gurt 15 nochmals um 45° in derselben Richtung (Gegenuhrzeigerrichtung) gedreht wird, so daß er von der ersten Erhebung 12a an nach unten vertikal verläuft. Er liegt dann vorn auf dem unteren vorderen Schenkel 8 auf dessen Gurtauflagefläche, die bei den ersten beiden Ausführungsformen eben ist.

Außer der Hohlkehle 17 ist in Figur 1 (stellvertretend auch für die anderen Ausführungsformen) die von der Spannkante 16 bzw. 16a ausgehende und in Richtung auf das Transportgut 1 gerichtete Anpreßkraft durch einen Kraftvektor 18 auf der einen Seite bzw. 18a auf der anderen Seite der Symmetrieebene 10 dargestellt. Die Pfeilspitze dieses Kraftvektors 18 zeigt auf die obere Fläche 3 des Transportgutes 1 an der Haupteingriffslinie 19 bzw. 19a. An dieser Stelle wirkt die Hauptkraft. Man erkennt insbesondere aus Figur 1, daß sich die Haupteingriffslinie 19 außerhalb der Hohlkehle 17 von der Transportgutkante 5 horizontal weg nach rechts befindet. Je größer dieser Abstand zwischen der Transportgutkante 5 und der Haupteingriffslinie 19 ist, um so mehr wird die Transportgutkante vor Beschädigungen geschützt. Der genannte Abstand bzw. der Schutz der Kante 5 wird durch Vergrößerung des Abstandes zwischen den beiden Spannkanten 16 und 16a vergrößert. Dies wiederum gelingt unter anderem durch Vergrößerung der Dicke D der Schenkel 7 bzw. 8.

Bei der ersten Ausführungsform mit den auf jeder Seite der Symmetrieebene 10 angeordneten drei Erhebungen 12, 13, 14 (bzw. 12a, 13a, 14a) ist die äußere Oberfläche 20 des Bogenabschnittes 9 in Richtung auf die Transportgutkante 5 eingezogen. Legt man durch die beiden Spannkanten 16 und 16a eine gedachte Ebene, dann liegt die Auflagefläche des Zurrgurtes 15 im Gebrauch genau in dieser Ebene, welche bei der ersten Ausführungsform von der Oberfläche 20 des Bogenabschnittes 9 nicht berührt wird. Dadurch ist sichergestellt, daß zwischen den Spannkanten keine Kraft auf den Kantenschutzwinkel 6 ausgeübt wird. Bei jeder der drei Ausführungsformen wird die Hauptkraft über die Spannkante 16 bzw. 16a auf den Kantenschutzwinkel übertragen.

Bei der zweiten Ausführungsform nach den Figuren 3 und 4 ist die Oberfläche 20 des Bogenabschnittes 9 zwischen den beiden Spannkanten 16 und 16a eine Ebene. Im Bereich dieser Ebene gibt es ersichtlich nur ein tangentiales leichtes Anliegen des Zurrgurtes 15 an der Oberfläche 20 des Bogenabschnittes 9, so daß praktisch kein Anpreßdruck in diesem ebenen Teil des Bogenabschnittes 9 auf den Kantenschutzwinkel ausgeübt wird. Ähnlich sind die Verhältnisse bei der dritten Ausführungsform nach den Figuren 5 und 6, wo auch zwischen den zwei Spannkanten 16 und 16a die Oberfläche 20 des Bogenabschnittes 9 eben ist und folglich einen Anpreßdruck bei festgezurrtem Gurt 15 nicht übertragen kann.

Bei den hier gezeigten Ausführungsformen des Kantenschutzwinkels aus Verbundpartikelkörpermaterial sind beide Oberflächen auf der Winkelinnenseite der Schenkel 7 , 8 rutschhemmend.

Bei den hier gezeigten Ausführungsformen des Kantenschutzwinkels aus Verbundpartikelkörpermaterial sind beide Oberflächen auf der Winkelinnenseite der Schenkel 7 , 8 rutschhemmend.

Während bei der dritten Ausführungsform das Ende des Bogenabschnittes 9 selbst eine Erhebung darstellt, die einzige Erhebung, so daß keine weiteren Erhebungen des Kantenschutzwinkels vorgesehen sind, ist bei den ersten beiden Ausführungsformen im Abstand von den Enden des Bogenabschnittes 9 in Richtung weg von der Symmetrieebene 10 jeweils mindestens eine zweite Erhebung 13 mit entsprechender Gurtauflagefläche vorgesehen. Bei der ersten Ausführungsform nach den Figuren 1 und 2 befinden sich im Abstand von der ersten Erhebung 12 eine zweite Erhebung 13 und wiederum im Abstand von dieser eine dritte Erhebung 14 außenseitig am Schutzwinkel 6, wobei auf der entsprechenden gegenüberliegenden Seite der Symmetrieebene 10 außer der ersten Erhebung 12a eine zweite Erhebung 13a und eine dritte Erhebung 14a am Schenkel 8 des Kantenschutzwinkels 6 angebracht sind. Auf die Vorteile der Materialeinsparung, der Verringerung des Gewichtes und der Vergrößerung der Rutschfestigkeit in Längsrichtung des Zurrgurtes ist vorstehend schon hingewiesen worden.

An den Seitenenden der Schenkel 7 und 8 sind die Erhebungen 12, 13, 14 überragende Gurtführungsstege 21 angebracht. Besonders deutlich erkennt man aus den Darstellungen der ersten beiden Ausführungsformen und dort den perspektivischen Zeichnungen, daß die Erhebungen 13 bzw. 12, 13 und 14 (und symmetrisch auf der anderen Seite der Symmetrieebene 10) als Querrippen ausgeformt sind. "Quer" im Sinne "senkrecht zur Laufrichtung des Gurtes 15".

Diese Querrippen und/oder der Bogenabschnitt sind von Längsrillen 22 durchzogen, deren Anzahl bei den hier dargestellten drei Ausführungsformen drei beträgt.

Um Hinterschneidungen beim Entformen des Kantenschutzwinkels 6 nach der Herstellung zu vermeiden, ist die der Symmetrieebene 10 abgewandte Fläche 23 der Erhebungen 12 bis 14 der ersten Ausführungsform, 12 und 13 der zweiten Ausführungsform und gegebenenfalls auch 12 der dritten Ausführungsform (selbstverständlich auch entsprechend auf der gegenüberliegenden Seite der Symmetrieebene 10) gegenüber der Schenkelmittelfläche 24 zwischen zwei Erhebungen (12, 13; 13, 14) unter 45° angestellt. Bei den Ausführungsformen zwei und drei ist die in Rede stehende abgewandte oder "hintere" Fläche 23 der ersten Erhebung 12 bzw. 12a gerundet, im Mittel ist sie aber ebenfalls unter 45° (und nicht stärker) gegen die Schenkelmittelfläche 24 angestellt. Bei der dritten Ausführungsform gibt es keine ausgeprägte Schenkelmittelfläche. Die Anstellung unter 45° ist dort bezüglich der Transportgutauflagefläche 11 zu verstehen, auf welche man blickt, wenn man nach Entfernen des Transportgutes 1 (siehe Figuren 5 und 6) von innen und unten auf den Kantenschutzwinkel blickt.

## Patentansprüche

1. Kantenschutzwinkel (6) zur Ladungssicherung von Transportgütern, (1) bestehend aus zwei unter etwa 90° zueinander an geordneten flächigen Schenkeln (7, 8) zur Auflage auf dem Transportgut (1), welche durch einen eine unter etwa 45° angestellte Symmetrieebene (10) aufweisenden Bogenabschnitt (9) miteinander verbunden sind und auf der Winkelaußenseite jeweils mit mindestens einer Erhebung (12, 12a; 13, 13a; 14, 14a) versehen sind, über die im Gebrauch ein Zurrgurt (15) verläuft, wobei die Enden des Bogenabschnittes (9) im beiderseitigen Abstand von der Symmetrieebene (10) jeweils als Erhebung (12-14) mit einer Spannkante (16, 16a) in der Gurtauflagefläche ausgebildet sind,
**dadurch gekennzeichnet, daß**
a) der Bogenabschnitt (9) auf der Winkelinnenseite im Bereich der Symmetrieebene (10) eine Hohlkehle (17) aufweist,
b) der Kantenschutzwinkel (6) aus Verbundkörpermaterial oder einem Holzkunststoffmaterial hergestellt ist,
c) die gemeinsame Ebene beider Spannkanten (16, 16a) zum Schutz vor Beschädigungen der Transportgutkante die äußere Oberfläche (20) des Bogenabschnittes (9) nicht berührt, so dass die durch die Spannkante (16, 16a) verlaufende Anpresskraft (18) an einer Stelle im Abstand von der Transportgutkante (5) auf der Seitenoberfläche (2, 3) des Transportgutes ausgeübt wird, um die Anpresskraft am Bogenabschnitt (9) zu verringern, und
d) die Dicke (D) des Schenkels (7, 8) zwischen Transportgutauflagefläche (11) und Gurtauflagefläche mindestens 15 mm beträgt.

2. Kantenschutzwinkel zur Ladungssicherung von Transportgütern (1), bestehend aus zwei unter etwa 90° zueinander angeordneten flächigen Schenkeln (7, 8) zur Auflage auf dem Transportgut (1), welche durch einen eine unter etwa 45° angestellte Symmetrieebene (10) aufweisenden Bogenabschnitt (9) miteinander verbunden sind und auf der Winkelaußenseite jeweils mit mindestens einer Erhebung (12, 12a; 13, 13a; 14, 14a) versehen sind, über diem Gebrauch ein Zurrgurt (15) verläuft, wobei die Enden des Bogenabschnittes (9) im beiderseitigen Abstand von der Symmetrieebene (10) jeweils als Erhebung (12-14) mit einer Spannkante (16, 16a) in der Gurtauflagefläche ausgebildet sind,
**dadurch gekennzeichnet, daß**
a) der Bogenabschnitt (9) auf der Winkelinnenseite im Bereich der Symmetrieebene (10) eine Hohlkehle (17) aufweist,
b) der Kantenschutzwinkel (6) aus Verbundkörpermaterial oder einem Holzkunststoffmaterial hergestellt ist,
c) die gemeinsame Ebene beider Spannkanten (16, 16a) zum Schutz vor Beschädigungen der Transportgurtkante die äußere Oberfläche (20) des Bogenabschnittes (9) tangential berührt, so dass die durch die Spannkante (16, 16a) verlaufende Anpresskraft (18) an einer Stelle im Abstand von der Transportgurtkante (5) auf der Seitenoberfläche (2, 3) des Transportgurtes (1) ausgeübt wird, um die Anpresskraft am Bogenabschnitt (9) zu verringern, und
d) die Dicke (D) des Schenkels (7, 8) zwischen Transportgutauflagefläche (11) und Gurtauflagefläche mindestens 15 mm beträgt.

3. Kantenschutzwinkel nach Anspruch 1 oder 2, **dadurch gekennzeichnet, daß** mindestens einer der Schenkel (7, 8) auf der Winkelinnenseite eine rutschhemmende Oberfläche hat.

4. Kantenschutzwinkel nach einem der Ansprüche 1 bis 3, **dadurch gekennzeichnet, daß** die äußere Oberfläche (20) des Bogenabschnittes (9) gegenüber der gemeinsamen Ebene beider Spannkanten (16, 16a) in Richtung auf die Transportgutkante (5) eingezogen ist.

5. Kantenschutzwinkel nach einem der Ansprüche 1 bis 4, **dadurch gekennzeichnet, daß** im Abstand von den Enden des Bogenabschnittes (9) in Richtung weg von der Symmetrieebene (10) jeweils mindestens eine zweite Erhebung (13, 13a) mit Gurtauflagefläche vorgesehen ist.

6. Kantenschutzwinkel nach einem der Ansprüche 1 bis 5, **dadurch gekennzeichnet, daß** an den Seitenenden der Schenkel (7, 8) die Erhebungen (12, 12a, 13, 13a, 14, 14a) überragende Gurtführungsstege (21) angebracht sind und die Erhebungen (12, 12a, 13, 13a, 14, 14a) als Querrippen ausgeformt sind.

7. Kantenschutzwinkel nach Anspruch 6, **dadurch gekennzeichnet, daß** die Querrippen (12, 13, 14) und der Bogenabschnitt (9) von Längsrillen (22) durchzogen sind.

8. Kantenschutzwinkel nach Anspruch 6, **dadurch gekennzeichnet, daß** die Querrippen (12, 13, 14) oder der Bogenabschnitt (9) von Längsrillen durchzogen sind.

9. Kantenschutzwinkel nach einem der Ansprüche 1 bis 8, **dadurch gekennzeichnet, dass** die der Symmetrieebene (10) abgewandte Fläche (23) der Erhebung (12, 13, 14) gegenüber der Schenkelmittelfläche (24) zwischen zwei Erhebungen (12, 13; 13, 14) unter 45° angestellt ist.

## Claims

1. An edge protection angular member (6) for loading protection of items (1) being transported, comprising two flat limbs (7, 8) arranged at approximately 90° relative to each other for bearing against the item (1) being transported, which are connected together by a curve portion (9) having a plane of symmetry (10) at approximately 45° and which are each provided on the outside of the angular member with at least one respective raised portion (12, 12a; 13, 13a; 14, 14a) over which in use a locking belt (15) passes, wherein the ends of the curve portion (9) at the spacing on both sides from the plane of symmetry (10) are each in the form of a raised portion (12-14) having a locking edge (16, 16a) in the belt contact surface,
**characterised in that**
a) the curve portion (9) has a channel (17) on the inside of the angular member in the region of the plane of symmetry (10),
b) the edge protection angular member (6) is made from composite material or a wood-plastic material,
c) the common plane of both locking edges (16, 16a) for protection from damage for the edge of the item being transported does not touch the outside surface (20) of the curve portion (9) so that the pressing force (18) passing through the locking edge (16, 16a) is exerted at a location at a spacing from the edge (5) of the item being transported on the side surface (2, 3) of the item being transported, to reduce the pressing force at the curve portion (9), and
d) the thickness (D) of the limb (7, 8) between the contact surface (11) of the item being transported and the belt contact surface is at least 15 mm.

2. An edge protection angular member for loading protection of items (1) being transported, comprising two flat limbs (7, 8) arranged at approximately 90° relative to each other for bearing against the item (1) being transported, which are connected together by a curve portion (9) having a plane of symmetry (10) at approximately 45° and which are each provided on the outside of the angular member with at least one respective raised portion (12, 12a; 13, 13a; 14, 14a) over which in use a locking belt (15) passes, wherein the ends of the curve portion (9) at the spacing on both sides from the plane of symmetry (10) are each in the form of a raised portion (12-14) having a locking edge (16, 16a) in the belt contact surface,
**characterised in that**
a) the curve portion (9) has a channel (17) on the inside of the angular member in the region of the plane of symmetry (10),
b) the edge protection angular member (6) is made from composite material or a wood-plastic material,
c) the common plane of both locking edges (16, 16a) for protection from damage for the edge of the item being transported tangentially touches the outside surface (20) of the curve portion (9) so that the pressing force (18) passing through the locking edge (16, 16a) is exerted at a location at a spacing from the edge (5) of the item being transported on the side surface (2, 3) of the item (1) being transported, to reduce the pressing force at the curve portion (9), and
d) the thickness (D) of the limb (7, 8) between the contact surface (11) of the item being transported and the belt contact surface is at least 15 mm.

3. An edge protection angular member according to claim 1 or claim 2 **characterised in that** at least one of the limbs (7, 8) has an anti-slip surface on the inside of the angular member.

4. An edge protection angular member according to one of claims 1 to 3 **characterised in that** the outside surface (20) of the curve portion (9) is taken in with respect to the common plane of both locking edges (6, 16a) in a direction towards the edge (5) of the item being transported.

5. An edge protection angular member according to one of claims 1 to 4 **characterised in that** at least one respective second raised portion (13, 13a) with a belt contact surface is provided at a spacing from the ends of the curve portion (9) in a direction away from the plane of symmetry (10).

6. An edge protection angular member according to one of claims 1 to 5 **characterised in that** belt guide legs (21) projecting beyond the raised portions (12, 12a, 13, 13a, 14a, 14a) are provided at the lateral ends of the limbs (7, 8) and the raised portions (12, 12a, 13, 13a, 14, 14a) are shaped in the form of transverse ribs.

7. An edge protection angular member according to claim 6 **characterised in that** the transverse ribs (12, 13, 14) and the curve portion (9) have longitudinal grooves (22) passing therethrough.

8. An edge protection angular member according to claim 6 **characterised in that** the transverse ribs (12, 13, 14) or the curve portion (9) have longitudinal grooves (22) passing therethrough.

9. An edge protection angular member according to one of claims 1 to 8 **characterised in that** the surface (23) of the raised portion (12, 13, 14), that is remote from the plane of symmetry (10), is at 45° with respect to the limb central surface (24) between two raised portions (12, 13; 13, 14).

## Revendications

1. Cornière (6) destinée à la protection du chargement de produits (1) de transport, comprenant deux branches (7, 8) plates agencées l'une par rapport à l'autre selon un angle d'environ 90 ° destinées à être appliquées sur le produit de transport, reliées l'une à l'autre au moyen d'un segment courbe (9) présentant un plan (10) de symétrie agencé selon un angle d'environ 45 ° et munies, sur le côté angulaire externe, respectivement d'au moins une saillie (12, 12a ; 13, 13a ; 14, 14a), sur laquelle s'étend une sangle (15) d'amarrage lors de l'utilisation, les extrémités du segment courbe (9) à une distance mutuelle du plan (10) de symétrie se présentant respectivement sous la forme d'une saillie (12-14) avec une arête (16, 16a) de serrage dans la surface de contact de la sangle, **caractérisée en ce que**
a) Le segment courbe (9) présente sur le côté angulaire interne dans la zone du plan (10) de symétrie une cannelure (17),
b) la cornière (6) est constituée d'un matériau de corps composite ou d'un matériau en bois/plastique,
c) le plan commun des deux arêtes (16, 16a) de serrage destinées à protéger l'arête du produit de transport contre un endommagement ne vient pas en contact avec la surface extérieure (20) du segment courbe (9), de sorte que la force (18) de pression traversant l'arête (16, 16a) de serrage est exercée en un emplacement à distance de l'arête (5) du produit de transport sur la surface latérale (2, 3) du produit de transport, afin de réduire la force de pression sur le segment courbe (9), et
d) l'épaisseur (D) de la branche (7, 8) entre la surface (11) d'application du produit de transport et la surface de contact de la sangle s'élève à au moins 15 mm.

2. Cornière destinée à la protection du chargement de produits de transport, comprenant deux branches (7, 8) plates agencées l'une par rapport à l'autre selon un angle d'environ 90 ° destinées à être appliquées sur le produit (1) de transport, reliées l'une à l'autre au moyen d'un segment courbe (9) présentant un plan (10) de symétrie agencé selon un angle d'environ 45 ° et munies, sur le côté angulaire externe, respectivement d'au moins une saillie (12, 12a ; 13, 13a ; 14, 14a), sur laquelle s'étend une sangle (15) d'amarrage lors de l'utilisation, les extrémités du segment courbe (9) à une distance mutuelle du plan (10) de symétrie se présentant respectivement sous la forme d'une saillie (12-14) avec une arête (16, 16a) de serrage dans la surface de contact de la sangle, **caractérisée en ce que**
a) le segment courbe (9) présente sur le côté angulaire interne dans la zone du plan (10) de symétrie une cannelure (17),
b) la cornière (6) est constituée d'un matériau de corps composite ou d'un matériau en bois/plastique,
c) le plan commun des deux arêtes (16, 16a) de serrage destinées à protéger l'arête du produit de transport contre un endommagement vient en contact de manière tangentielle avec la surface extérieure (20) du segment courbe (9), de sorte que la force (18) de pression traversant l'arête (16, 16a) de serrage est exercée en un emplacement à distance de l'arête (5) du produit de transport sur la surface latérale (2, 3) du produit de transport (1), afin de réduire la force de pression sur le segment courbe (9), et
d) l'épaisseur (D) de la branche (7, 8) entre la surface (11) d'application du produit de transport et la surface de contact de la sangle s'élève à au moins 15 mm.

3. Cornière selon la revendication 1 ou 2, **caractérisée en ce qu'**au moins une des branches (7, 8) présente sur le côté angulaire interne une surface antidérapante.

4. Cornière selon l'une quelconque des revendications 1 à 3, **caractérisée en ce que** la surface extérieure (20) du segment courbe (9) est insérée par rapport au plan commun des deux arêtes (16, 16a) de serrage dans la direction de l'arête (5) du produit de transport.

5. Cornière selon l'une quelconque des revendications 1 à 4, **caractérisée en ce qu'**au moins une seconde saillie (13, 13a) présentant une surface de contact de sangle est respectivement agencée à une certaine distance des extrémités du segment courbe (9) dans la direction opposée au plan (10) de symétrie.

6. Cornière selon l'une quelconque des revendications 1 à 5, **caractérisée en ce que** des rails (21) de guidage de la sangle surplombant les saillies (12, 12a, 13, 13a, 14, 14a) sont montés sur les extrémités latérales des branches (7, 8) et les saillies (12, 12a, 13, 13a, 14, 14a) présentent la forme de nervures transversales.

7. Cornière selon la revendication 6, **caractérisée en ce que** les nervures transversales (12, 13, 14) et le segment courbe (9) sont traversés par des rainures longitudinales (22).

8. Cornière selon la revendication 6, **caractérisée en ce que** les nervures transversales (12, 13, 14) ou le segment courbe (9) sont traversés par des rainures longitudinales.

9. Cornière selon l'une quelconque des revendications 1 à 8, **caractérisée en ce que** la surface (23) opposée au plan (10) de symétrie de la saillie (12, 13, 14) est agencée selon un angle de 45 ° par rapport à la surface centrale (24) des branches entre deux saillies.
